# EUROPEAN PATENT APPLICATION

(11) **EP 3 342 590 A1**
(43) Date of publication of application: **04.07.2018**
(21) Application number: 16838366.9
(22) Date of filing: 25.05.2016
(51) Int. Cl.: B32B 33/00, A63H 27/00

(54) **METHOD FOR BEAUTIFYING OCHROMA MODEL AIRCRAFT WITH THERMALLY-CONTRACTED SKIN**

(30) Priority: 24.08.2015 CN 201510528152
(71) Applicant: Vio-Sol Model Aircraft Manufacturing Co., Ltd., Zhuhai City, Guangdong 519060 (CN)
(72) Inventor: YANG, Tianyi, Zhuhai City Guangdong 519060 (CN)
(74) Representative: Monteiro Alves, Inês
(86) International application number: PCT/CN2016/083268
(87) International publication number: WO 2017/032106

(57) **Abstract**

A method for beautifying an Ochroma model aircraft with a thermal shrink covering film comprises: printing a colored ink on a white covering film using a UV flatbed printer to obtain a covering film printed with a graphic; placing a wooden-structure frame of a model aircraft on a horizontal desktop, and pressing the covering film printed with a graphic onto the wooden-structure frame using an iron of 205-215°C; evenly heating the surface of the covering film at a position 12 cm thereabove using an industrial heat gun that forms an angle of inclination of 50-60 degrees with the horizontal plane, and stopping heating when the covering film is evenly shrunk and adhered to the wooden-structure frame, wherein the industrial heat gun has a temperature of 205-215°C; and dedusting the surface of the covering film, and spraying a layer of varnish having a thickness of 0.01-0.02 mm on the surface of the covering film, so that the Ochroma model aircraft with a thermal shrink covering film is obtained after the varnish is dried completely. This method makes a model aircraft colorful, reduces labor costs, improves the beautifying and painting effect of the model aircraft, and also improves the pneumatic performance of the model aircraft.

## Description

### TECHNICAL FIELD

The present invention relates to a method for beautifying an Ochroma model aircraft with a thermal shrink covering film, pertaining to the field of model aircraft production and manufacturing.

### BACKGROUND ART

Currently, China is a big producer of model aircrafts, of which the output accounts for about 70% of that of model aircrafts in the world. From early 90s to the present, manufacturing materials of model aircrafts all over the world mainly include: foam-material (such as EPO and EPP materials) aircrafts, Ochroma aircrafts with a thermal shrink covering film, and glass fiber composite aircrafts. The Ochroma aircrafts with a thermal shrink covering film account for about 50% of the total output of model aircrafts.

A current manufacturing process of an Ochroma model aircraft with a thermal shrink covering film is as follows:
1. blanking: cutting an Ochroma raw material into needed parts;
2. assembling: adhering various parts together, to form a wooden-structure frame of a model aircraft; and
3. beautifying: cutting thermal shrink covering films of different colors into various graphics, and adhering the cut thermal shrink covering films onto the wooden-structure frame of the model aircraft using an iron or a heat gun; however, the colors are not rich enough, and the beautifying process is time-consuming and labor-consuming; a lot of covering films of different colors (such as red covering film, blue covering film, and yellow covering film) need to be stocked, which requires a lot of money.

The UV curing printing technology is widely applied to outdoor advertisement inkjet printing, gift processing industry, logo industry, decoration industry, personalized printing industry, and so on, but has not been applied to the model aircraft manufacturing industry.

### SUMMARY OF THE INVENTION

The current UV flatbed printer is mainly used for outdoor advertisement inkjet printing. A printing material thereof is relatively thick, and can be easily evenly adsorbed on a working platform of the printer. However, current covering films used in manufacturing of Ochroma model aircrafts are mostly from the German brand Oracover. The covering film of this brand is very thin and light, and it is difficult to place the covering film flat. When placed into the existing UV flatbed printer for printing, the covering film wrinkles easily, affecting a printing effect. Therefore, it is necessary to improve a working platform structure of the existing UV flatbed printer, so that it meets the production requirement of the model aircraft manufacturing industry.

A technical problem to be solved in the present invention is to provide a method for beautifying an Ochroma model aircraft with a thermal shrink covering film. This method enriches colors of the model aircraft, reduces labor and costs, reduces occupied funds, and improves a beautifying and painting effect of the model aircraft. Such a beautifying effect is unachievable via a conventional covering film beautifying method, and this method also improves the pneumatic performance of the model aircraft.

The technical solution of the present invention for solving the above technical problem is as follows: a method for beautifying an Ochroma model aircraft with a thermal shrink covering film, including:
1) placing a white covering film on a working platform of a UV flatbed printer, and printing a colored ink on the white covering film using the UV flatbed printer, to obtain a covering film printed with a graphic;
2) placing a wooden-structure frame of a model aircraft on a horizontal desktop, and pressing the covering film printed with a graphic onto the wooden-structure frame of the model aircraft using an iron of 205-215°C, to obtain a treated model aircraft;
3) evenly heating the surface of the covering film at a position 12 cm thereabove using an industrial heat gun that forms an angle of inclination of 50-60 degrees with the horizontal plane, and stopping heating when the covering film is evenly shrunk and adhered to the wooden-structure frame of the model aircraft, wherein the industrial heat gun has a temperature of 205-215°C; and
4) dedusting the surface of the covering film, and spraying a layer of varnish having a thickness of 0.01-0.02 mm on the surface of the covering film, so that the Ochroma model aircraft with a thermal shrink covering film is obtained after the varnish is dried completely.

Based on the foregoing technical solution, the present invention may further make the following improvements.

Further, in 1), the working platform of the UV flatbed printer includes a rack and a workbench, and the workbench is mounted on the rack;
the workbench includes a workbench body and a workbench desktop; the workbench body is of a cuboid structure having a length of 3120 mm and a width of 1820 mm, and is mounted on the rack; the cuboid structure is provided with a rectangular groove having a length of 2740 mm and a width of 1300 mm; the workbench desktop is disposed at the opening of the groove and is flush with the upper plane of the cuboid structure; the workbench desktop and the groove are divided into four rectangular areas through partition plates arranged in the groove; air intakes are densely distributed in each rectangular area on the workbench desktop, and the air intakes are arranged into a rectangle having a length of 2550 mm and a width of 1240 mm on the workbench desktop; the air intakes each have a diameter of 1.5 mm, and a distance between centers of two adjacent air intakes is 20 mm; each rectangular area in the groove is provided with a through hole at the bottom; the workbench body, the workbench desktop, and the partition plate are integrally formed; and
one main pipe and two 1.1 KW vacuumizers are disposed under the workbench body; the main pipe is provided with four air inlet ends and two air outlet ends; the four air inlet ends on the main pipe are each connected to an air suction pipe, and the other ends of the four air suction pipes separately pass through the through hole to be communicated with an area under the workbench desktop; the two air outlet ends on the main pipe are each connected to an air inlet pipe, and the other ends of the two air inlet pipes are connected to air inlet ends of the two vacuumizers respectively; air outlet ends of the two vacuumizers are each connected to an air outlet pipe; and four valves are mounted on a side wall of the rack, to control opening and closing of the four air suction pipes respectively.

This step achieves the following beneficial effect: the air intakes densely distributed on the workbench desktop form a rectangle having a length of 2550 mm and a width of 1240 mm. This length is suitable for the maximum length of products in the current model aircraft manufacturing industry. A white covering film from the German brand Oracover has a width of 600 mm, and the width is just suitable for parallel printing of two white covering films along the longitudinal direction, to achieve maximum working efficiency.

A current UV flatbed printer is equipped with two 0.8 KW vacuumizers. Such an adsorption force is not large enough to adsorb the covering film used on the model aircraft, and therefore cannot meet a use requirement. Therefore, in the present invention, the printer is equipped with two 1.1 KW vacuumizers, which achieves a relatively strong suction effect, so that the covering film can be adsorbed onto the workbench desktop more flat and more firmly, to facilitate printing.

In the present invention, the diameter of each air intake on the working platform is limited to 1.5 mm, and when the covering film is placed on the working platform of the UV flatbed printer for printing, the surface of the covering film does not wrinkle. If the diameter of the air intake exceeds 1.5 mm, during working, the vacuumizer may adsorb the covering film and enable the covering film be lower than the workbench desktop at the air intake position, thus affecting the printing effect. The distance between centers of two adjacent air intakes is 20 mm, which does not affect the strength of the working platform and the workbench desktop, and minimizes the possibility of poor printing effect caused by roughness of the workbench desktop.

Further, in 1), the white covering film is from the German brand Oracover.

Further, in 4), the varnish is QQ100 mirror varnish or CP981S super-fast-drying varnish, both of which are purchased from Zhuhai Guoxin Trade Co., Ltd.

This step achieves the following beneficial effects: the surface of the covering film is enabled to have a higher degree of finish, so that the graphic on the surface of the covering film can be better protected, so as to be maintained as long as possible when exposed to the weather. In addition, due to the tight coverage and wrapping of the varnish, the covering film is closely adhered to the wooden-structure frame of the model aircraft and does not wrinkle or deform easily, and this is an effect unachievable via the conventional covering film beautifying method.

The present invention achieves the following beneficial effects:
1. The present invention improves the structure of the existing UV flatbed printer, enlarges the working platform of the printer according to the size of the covering film, and improves the vacuum adsorbing capacity of the printer, so that the printer meets the requirement of the model aircraft manufacturing industry.
2. This method can easily print various complex colors and graphics on the covering film, and achieves an effect that is incomparable with the several monotonous colors used in the conventional covering film beautifying method. This method significantly enriches the colors and painting of the model aircraft.
3. This method employs a UV printing technology for covering film printing. Platemaking is unnecessary, color matching is simple, and platemaking pre-treatment is fast. Only white covering films are needed, and an enterprise does not need to stock covering films of various colors, which saves money for the enterprise. The method is applicable to the model aircraft manufacturing industry.
4. The model aircraft beautified using this method only has one layer of covering film adhered thereto, so that the weight of the model aircraft is reduced, and the flight characteristic of the model aircraft is improved.

### BRIEF DESCRIPTION OF THE DRAWINGS

FIG. 1 is a front view of a working platform of a printer applicable to model aircraft printing according to the utility model;
FIG. 2 is a top view of the working platform of the printer applicable to model aircraft printing according to the utility model, where L represents length, and W represents width;
FIG. 3 is a schematic diagram of a connection between an air suction pipe and a through hole of the working platform of the printer applicable to model aircraft printing according to the utility model;
FIG. 4 is a left view of the working platform of the printer applicable to model aircraft printing according to the utility model; and
FIG. 5 is a schematic diagram of connections between a main pipe and air inlet pipes as well as air suction pipes of the working platform of the printer applicable to model aircraft printing according to the utility model.

In the drawings, parts represented by the reference numerals are listed as follows:
1: rack; 2: workbench body; 3: workbench desktop; 4: air intake; 5: vacuumizer; 6: air inlet pipe; 7: air outlet pipe; 8: main pipe; 9: valve; 10: air suction pipe.

### DETAILED DESCRIPTION

The principle and features of the present invention are described in the following. The examples are only used for illustrating the present invention, but are not intended to limit the scope of the present invention.

### Embodiment 1

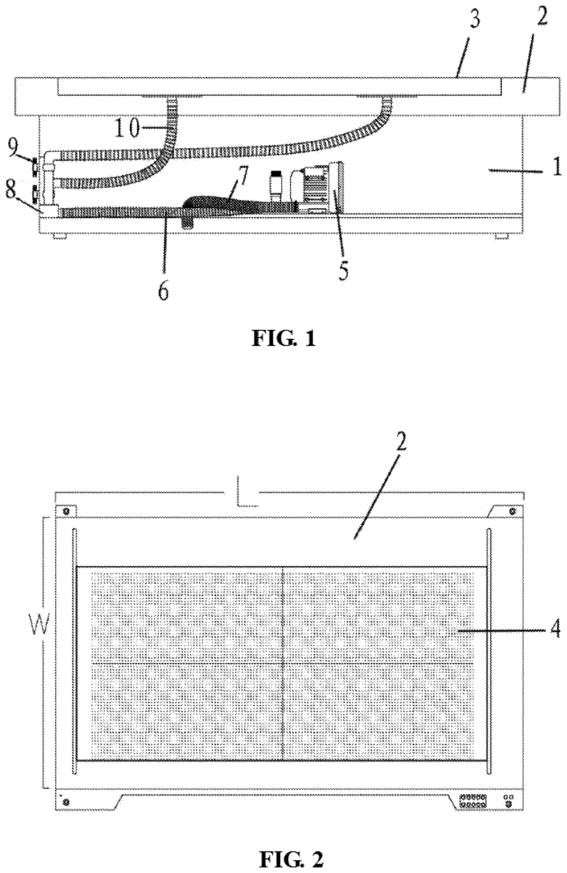

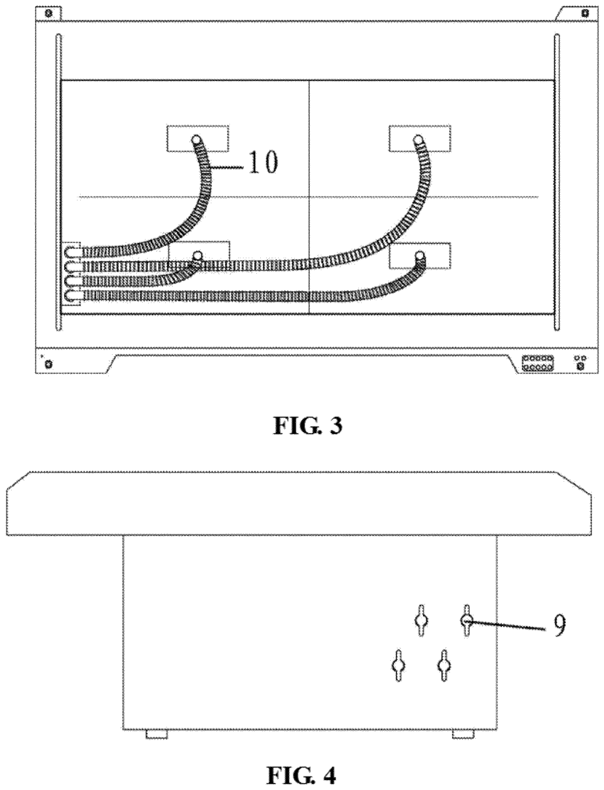

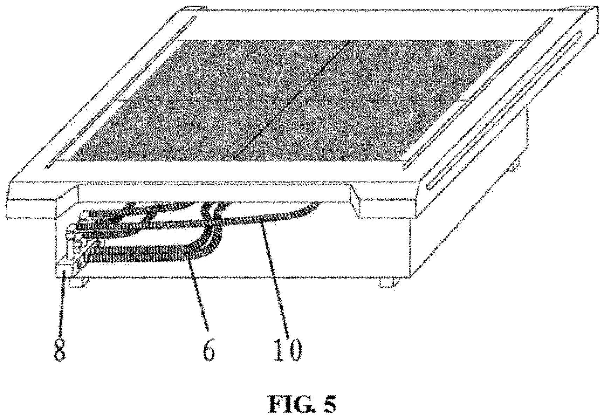

A method for beautifying an Ochroma model aircraft with a thermal shrink covering film includes the following steps:
1) A white covering film, which is from the German brand Oracover, is placed on a working platform of a UV flatbed printer, and a colored ink is printed on the white covering film using the UV flatbed printer, to obtain a covering film printed with a graphic.
   As shown in FIG. 1 to FIG. 5, the working platform of the UV flatbed printer includes a rack 1 and a workbench, and the workbench is mounted on the rack 1.
   The workbench includes a workbench body 2 and a workbench desktop 3; the workbench body 2 is of a cuboid structure having a length (represented by L in FIG. 2) of 3120 mm and a width (represented by W in FIG. 2) of 1820 mm, and is mounted on the rack 1. The cuboid structure is provided with a rectangular groove having a length of 2740 mm and a width of 1300 mm. The workbench desktop 3 is disposed at the opening of the groove and is flush with the upper plane of the cuboid structure. The workbench desktop 3 and the groove are divided into four rectangular areas through partition plates arranged in the groove. Air intakes 4 are densely distributed in each rectangular area on the workbench desktop 3, and the air intakes 4 are arranged into a rectangle having a length of 2550 mm and a width of 1240 mm on the workbench desktop 3. The air intakes 4 each have a diameter of 1.5 mm, and a distance between centers of two adjacent air intakes 4 is 20 mm. Each rectangular area in the groove is provided with a through hole at the bottom. The workbench body 2, the workbench desktop 3, and the partition plate are integrally formed.
   One main pipe 8 and two 1.1 KW vacuumizers 5 are disposed under the workbench body 2. The main pipe 8 is provided with four air inlet ends and two air outlet ends. The four air inlet ends on the main pipe 8 are each connected to an air suction pipe 10, and the other ends of the four air suction pipes 10 separately pass through the through hole to be communicated with an area under the workbench desktop 3. The two air outlet ends on the main pipe 8 are each connected to an air inlet pipe 6, and the other ends of the two air inlet pipes 6 are connected to air inlet ends of the two vacuumizers 5 respectively. Air outlet ends of the two vacuumizers 5 are each connected to an air outlet pipe 7. Four valves 9 are mounted on a side wall of the rack 1, to control opening and closing of the four air suction pipes 10 respectively.
2) A wooden-structure frame of a model aircraft is placed on a horizontal desktop, and the covering film printed with a graphic is pressed onto the wooden-structure frame of the model aircraft using an iron of 205-215°C, to obtain a treated model aircraft.
3) The surface of the covering film is evenly heated at a position 12 cm thereabove using an industrial heat gun that forms an angle of inclination of 50-60 degrees with the horizontal plane, and heating is stopped when the covering film is evenly shrunk and adhered to the wooden-structure frame of the model aircraft, wherein the industrial heat gun has a temperature of 205-215°C.
4) The surface of the covering film is dedusted, and a layer of CP981S super-fast-drying varnish (which is purchased from Zhuhai Guoxin Trade Co., Ltd.) having a thickness of 0.01-0.02 mm is sprayed on the surface of the covering film, so that the Ochroma model aircraft with a thermal shrink covering film is obtained after the varnish is dried completely.

The model aircraft beautified using this method is light in weight. The existing beautifying process requires stacking of multiple layers of covering films to achieve a beautifying effect, while this method employs ink printing for beautifying, by using only one layer of covering film. In the model aircraft manufacturing industry, the decrease in weight is calculated in grams, and the weight of one square meter of covering film is 100 grams to 300 grams. When the wooden-structure frame of the same model aircraft is printed using this method and the existing beautifying method, this method reduces the weight by 10%.

The above descriptions are merely preferred embodiments of the present invention, which are not intended to limit the present invention. Any modification, equivalent replacement, improvement, and so on made without departing from the spirit and principle of the present invention shall be covered in the protection scope of the present invention.

## Claims

1. A method for beautifying an Ochroma model aircraft with a thermal shrink covering film, comprising:
1) placing a white covering film on a working platform of a UV flatbed printer, and printing a colored ink on the white covering film using the UV flatbed printer, to obtain a covering film printed with a graphic;
2) placing a wooden-structure frame of a model aircraft on a horizontal desktop, and pressing the covering film printed with a graphic onto the wooden-structure frame of the model aircraft using an iron of 205-215°C, to obtain a treated model aircraft;
3) evenly heating the surface of the covering film at a position 12 cm thereabove using an industrial heat gun that forms an angle of inclination of 50-60 degrees with the horizontal plane, and stopping heating when the covering film is evenly shrunk and adhered to the wooden-structure frame of the model aircraft, wherein the industrial heat gun has a temperature of 205-215°C; and
4) dedusting the surface of the covering film, and spraying a layer of varnish having a thickness of 0.01-0.02 mm on the surface of the covering film, so that the Ochroma model aircraft with a thermal shrink covering film is obtained after the varnish is dried completely.

2. The beautifying method according to claim 1, wherein in 1), the working platform of the UV flatbed printer comprises a rack and a workbench, and the workbench is mounted on the rack;
the workbench comprises a workbench body and a workbench desktop; the workbench body is of a cuboid structure having a length of 3120 mm and a width of 1820 mm, and is mounted on the rack; the cuboid structure is provided with a rectangular groove having a length of 2740 mm and a width of 1300 mm; the workbench desktop is disposed at the opening of the groove and is flush with the upper plane of the cuboid structure; the workbench desktop and the groove are divided into four rectangular areas through partition plates arranged in the groove; air intakes are densely distributed in each rectangular area on the workbench desktop, and the air intakes are arranged into a rectangle having a length of 2550 mm and a width of 1240 mm on the workbench desktop; the air intakes each have a diameter of 1.5 mm, and a distance between centers of two adjacent air intakes is 20 mm; each rectangular area in the groove is provided with a through hole at the bottom; and the workbench body, the workbench desktop, and the partition plate are integrally formed;
one main pipe and two 1.1 KW vacuumizers are disposed under the workbench body; the main pipe is provided with four air inlet ends and two air outlet ends; the four air inlet ends on the main pipe are each connected to an air suction pipe, and the other ends of the four air suction pipes separately pass through the through hole to be communicated with an area under the workbench desktop; the two air outlet ends on the main pipe are each connected to an air inlet pipe, and the other ends of the two air inlet pipes are connected to air inlet ends of the two vacuumizers respectively; air outlet ends of the two vacuumizers are each connected to an air outlet pipe; and four valves are mounted on a side wall of the rack, to control opening and closing of the four air suction pipes respectively.

3. The beautifying method according to claim 1 or 2, wherein in 1), the white covering film is from the German brand Oracover.
